# EUROPÄISCHE PATENTSCHRIFT

(11) **EP 1 573 218 B1**
(45) Veröffentlichungstag und Bekanntmachung des Hinweises auf die Patenterteilung: **12.09.2007**
(21) Anmeldenummer: 03789295.7
(22) Anmeldetag: 16.12.2003
(51) Int. Cl.: F16D 23/06

(54) **NUT IN EINEM SCHALTMUFFENTRÄGER**
GROOVE IN A GEARCHANGE COLLAR SUPPORT
RAINURE DANS UN SUPPORT DE MANCHON COULISSANT

(30) Priorität: 21.12.2002 DE 10260559
(43) Veröffentlichungstag der Anmeldung: 14.09.2005
(73) Patentinhaber: Schaeffler KG, 91074 Herzogenaurach (DE)
(72) Erfinder: SCHWUGER, Josef, 91074 Herzogenaurach (DE)
(86) Internationale Anmeldenummer: PCT/EP2003/014298
(87) Internationale Veröffentlichungsnummer: WO 2004/057204

(56) Entgegenhaltungen:
- DE-A- 10 010 076
- DE-C- 19 922 325
- GB-A- 733 745
- US-A- 5 113 985

## Beschreibung

### Gebiet der Erfindung

Die Erfindung betrifft einen um eine Rotationsachse drehbaren Schaltmuffenträger mit einer Nut, wobei die Nut mit der Rotationsachse des Schaltmuffenträgers richtungsgleich verläuft und dabei die Nut radial nach außen von der Rotationsachse weg sowie endseitig der Nut und dabei stirnseitig des Schaltmuffenträgers offen ist und wobei die Nut einen umfangsseitig außen liegenden Zahnkranz des Schaltmuffenträgers unterbricht und dabei die Nut zumindest durch wenigstens zwei quer zur Rotationsachse einander gegenüberliegende und dabei jeweils stirnseitig des Schaltmuffenträgers auslaufende Wandabschnitte des Muffenträgers begrenzt ist.

### Hintergrund der Erfindung

Derartige Nuten sind als Aufnahme und Führung von Druckstücken, Gleitstücken und für die Aufnahme von Kombinationen aus Druckstücken und Rastelementen an Schaltmuffenträgern ausgebildet. Ein Schaltmuffenträger mit Nuten der gattungsbildenden Art ist zum Beispiel in DE195 80 558 A1 beschrieben. Die Nuten sind Ausnehmungen, die sich in ihrer Tiefe radial in Richtung der Rotationsachse des Schaltmuffenträgers in den Schaltmuffenträger hinein erstrecken und die mit der Rotationsachse des Schaltmuffenträgers gleichgerichtet verlaufen, die zu den Stirnseiten des Schaltmuffenträgers hin endseitig offen sind und die z.B. zumindest zeitweise über die Stirnseiten des Schaltmuffenträgers hinausragende Druckstücke aufnehmen. Die Erfindung betrifft weiter alle Nuten, z.B. zur rotationsfesten Mitnahme von Synchronringen o.ä., die den radial außen an dem Schaltmuffenträger ausgebildeten oder befestigten Zahnkranz umfangsseitig des Schaltmuffenträgers unterbrechen. Mit der Erfindung sind weiter alle denkbaren Formen von Nuten der gattungsbildenden Art, wie beispielsweise Nuten mit einem im Wesentlichen U-förmigen oder T-förmigem Querschnitt erfasst.

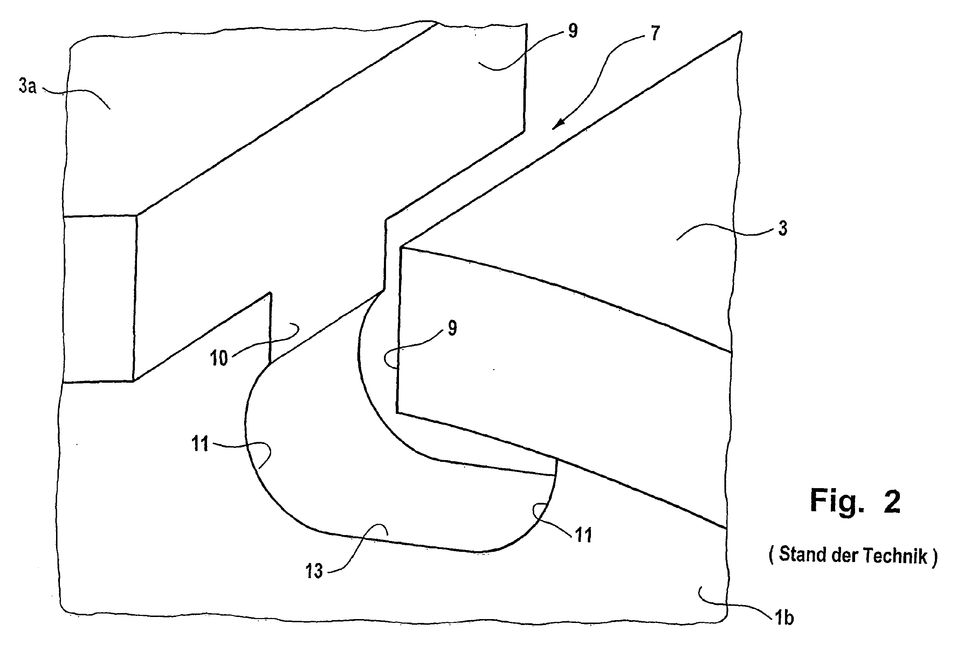

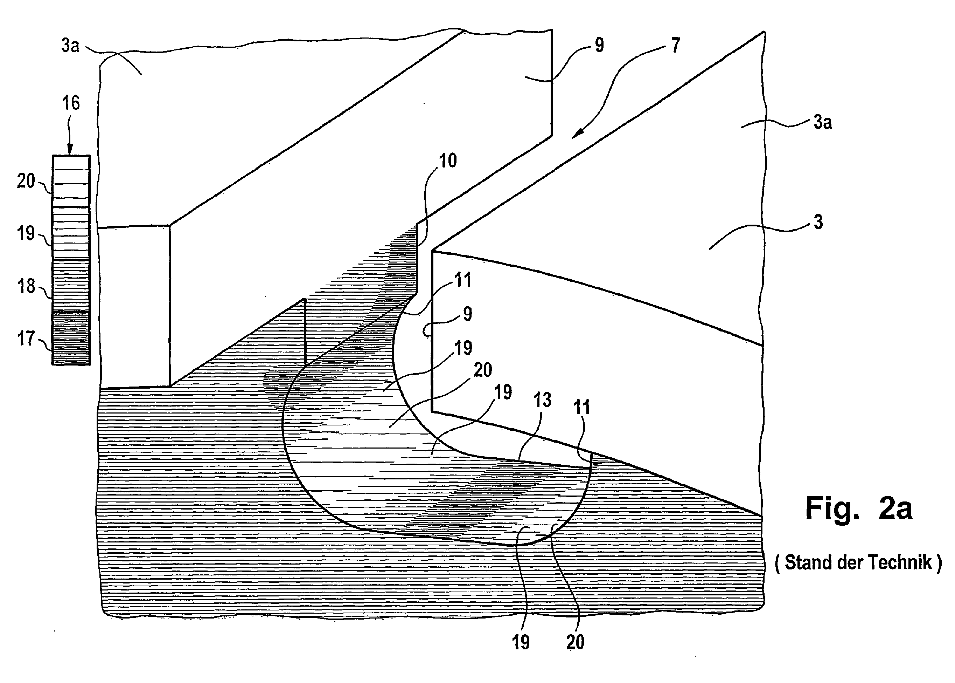

Die Nuten sind Kerben an dem Schaltmuffenträger. Die Kerben wirken sich nachteilig auf die Verteilung der Spannungen aus, die aus den Reaktionskräften der Verzahnung in dem Material des Zahnkranzes entstehenden. Der Gestaltung der Nuten ist deshalb besondere Aufmerksamkeit zu widmen. In einem umfangsseitig nicht unterbrochenen und somit umfangsseitig geschlossen umlaufenden Zahnkranz sind in der Regel die Spannungen gleichmäßig in dem Zahnkranz und dem Schaltmuffenträger verteilt und dabei auf einem für das Material ertragbaren Niveau gehalten. Bei unterbrochenen Zahnkränzen entstehen in den Nuten, insbesondere an den Innenkanten Spannungsspitzen. Diese Kanten erstrecken sich in der Nut über die gesamte Breite des Schaltmuffenträgers von einer Stirnseite zur anderen. Die Spannungsspitzen sind besonders an den Innenkanten hoch, an denen die Nut von Seitenwänden in den Nutgrund übergeht. Diese Innenkanten, wie beispielsweise in GB 733,745 vorgestellt, sind rissgefährdet. In der Vergangenheit wurden deshalb Versuche unternommen, die Kerbspannungen durch die dem Maschinenbauer bekannte Gestaltung von Übergängen an derartig rissgefährdeten Kanten und ihrer Umgebung zu mindern. So sind die scharfkantigen Übergänge beispielsweise durch einen Übergang mit einem Radius oder durch eine freistichartig ausgearbeitete und quer zur Rotationsrichtung verlaufenden Nut ersetzt. In einer anderen Gestaltung der Übergänge (dargestellt nachfolgend in Figur 2 und 2a) ist jede der beiden seitlichen und die Nut begrenzenden Wandungen in eine der Rotationsrichtungen kehlnutartig in das Material des Schaltmuffenträgers hinein konvex auswölbt. Dabei die Nut an dem Übergang quer zur Rotationsachse verbreitert. Die dadurch entstandene gewölbte Wandfläche geht dann in den Grund der Nut nach dem Stand der Technik weist eine sich von einem der Wandabschnitte zu dem anderen der Wandabschnitte erstreckende, tangential ausgerichtete, sowie radial nach außen von der Rotationsachse weg weisende ebene Fläche auf, die parallel zu der Rotationsachse des Schaltmuffenträgers verläuft.

Diese an sich zufriedenstellende Lösung führte jedoch an Schaltmuffenträgern für Belastungen aus hohen Drehmomenten erneut zur Rissgefahr in den Übergängen der Nut zum Grund der Nut. Es liegt zunächst nahe, dieses Problem durch die Verstärkung des Grundmaterials an dem Muffenträger zumindest im Bereich der Nuten zu beheben. An Schaltmuffenträgern aus kalt geformten und/oder gestanzten Blech ist dazu die Materialstärke des Ausgangsmateriales zu erhöhen. Die Vorteile, wie der geringe Materialverbrauch bei der Herstellung der Bauteile oder das geringe Gewicht der Schaltmuffenträger, sind damit zumindest teilweise aufgehoben. Die Energiebilanz bei der Herstellung der Schaltmuffenträger aufgrund höheren Materialverbrauchs und bei der Nutzung der Getriebe aufgrund höheren Gewichtes ist nachteilig beeinflusst.

### Zusammenfassung der Erfindung

Die Aufgabe der Erfindung ist es daher, die Nuten der gattungsbildenden Art, insbesondere an im wesentlichen durch spanlose Verfahren hergestellten Schaltmuffenträgern so zu gestalten, dass Anrisse infolge Spannungsspitzen aus hohen Drehmomenten in den Nuten vermieden sind. Dabei soll jedoch der Einsatz von mehr Material bei der Herstellung der Schaltmuffenträger möglichst vermieden werden.

Diese Aufgabe ist nach dem Gegenstand des kennzeichnenden Teiles des Anspruches 1 gelöst. Jeder die Nut an dem Übergang quer zur Rotationsrichtung begrenzende Wandabschnitt geht in jeweils einen Flächenabschnitt über. Die Flächen der Flächenabschnitte sind in der Nut von der Rotationsachse weg radial nach außen gerichtet und verlaufen von den Wandabschnitten weg geneigt oder gekrümmt in Richtung der Rotationsachse radial nach innen abfallend. Schließlich treffen die Flächenabschnitte aufeinander und gehen ineinander über. Der Nutgrund ist somit aus zwei aufeinander zu verlaufenden und vorzugsweise nach der Hälfte des freien Abstandes zwischen den Wandabschnitten aufeinander treffenden bzw. ineinander übergehenden Flächenabschnitten gebildet. Jeder der Flächenabschnitte fällt dabei, im Querschnitt des Schaltmuffenträgers und somit im Querschnitt der Nut betrachtet, zur Rotationsachse hin beispielsweise konvex oder konkav gekrümmt ab. Eine bevorzugte Ausgestaltung der Erfindung sieht vor, dass die Flächenabschnitte eben ausgebildet sind und somit im Querschnitt des Schaltmuffenträgers und der Nut betrachtet zur Rotationsachse hin geneigt aufeinander zu verlaufen, wobei die Flächenabschnitte nutseitig vorzugsweise einen stumpfen Winkel zwischen sich einschließen.

Eine Ausgestaltung der Erfindung sieht vor, dass die beiden aufeinander treffenden Flächenabschnitten im Nutgrund in einer quer zur Rotationsrichtung verlaufenden sowie mit einem Radius verrundeten Kehle ineinander übergehen. Mit einer derartigen Gestaltung ist eine scharf ausgebildete Innenkante an dem Übergang der Flächenabschnitte vermieden. Schließlich ist mit einer Ausgestaltung der Erfindung vorgesehen, dass die den Übergang der Nut zum Nutgrund begrenzenden Wandabschnitte im Querschnitt der Nut betrachtet von der Nut aus und dabei quer zur Rotationsachse voneinander weg konvex gekrümmt sind.

### Beschreibung der Zeichnungen

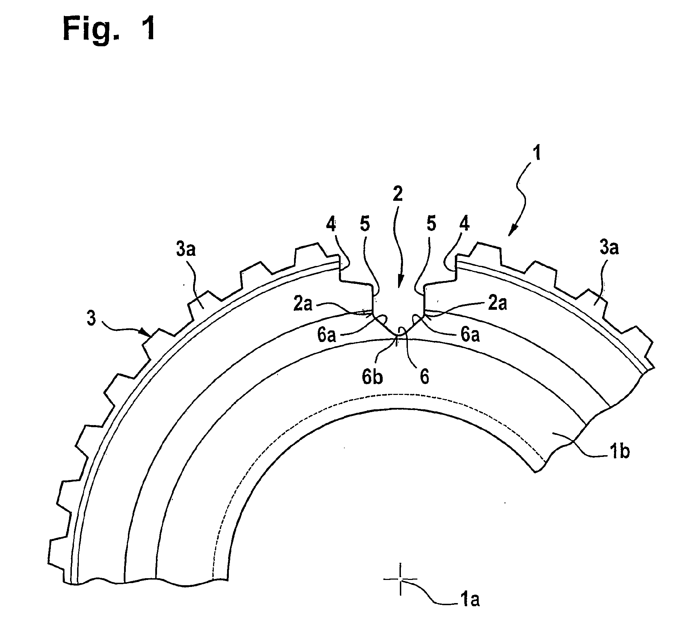

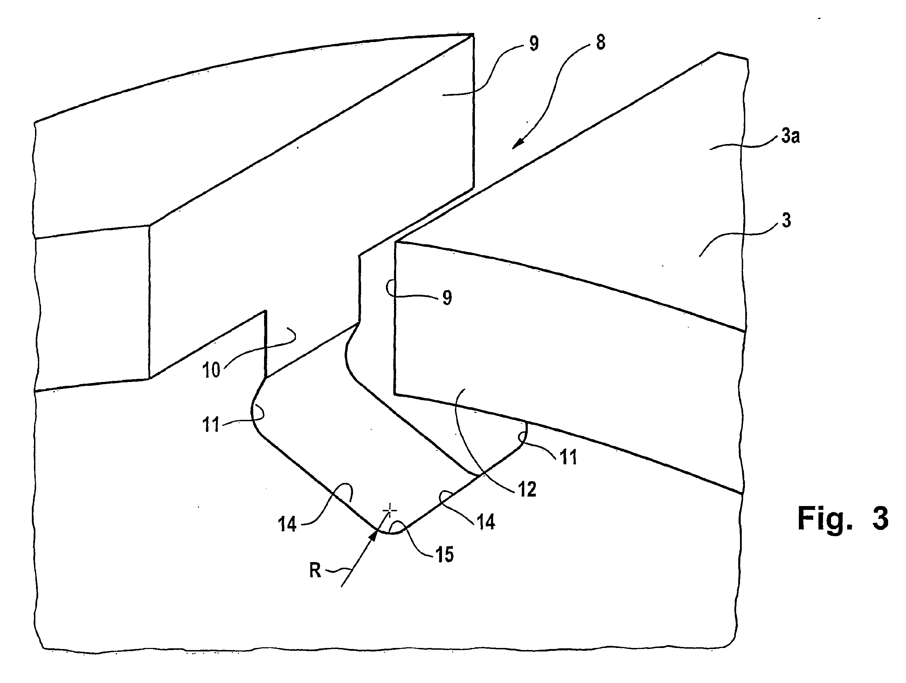

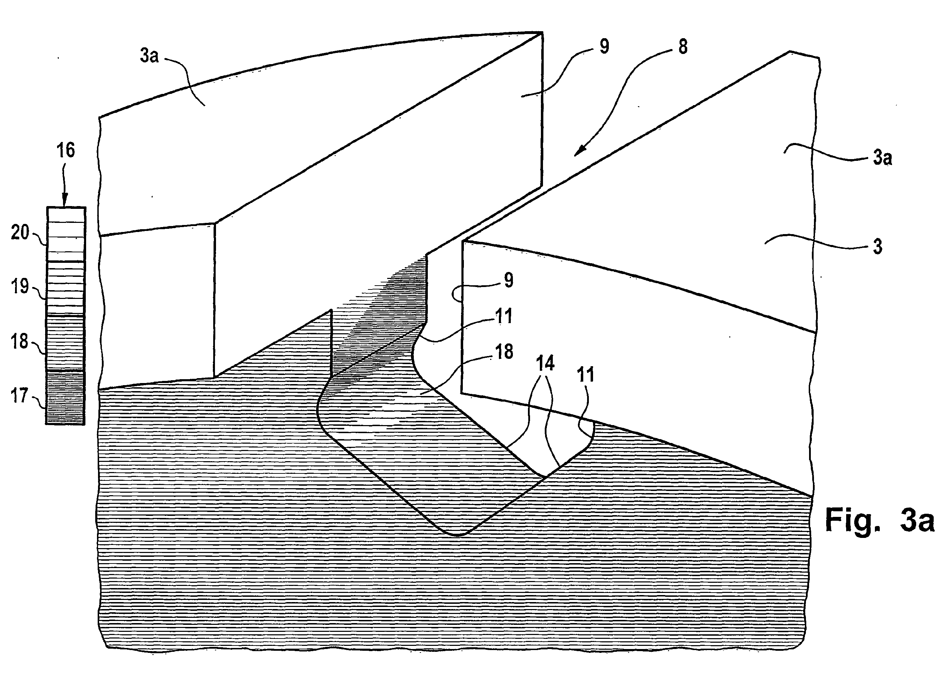

In den Figuren 1 und 3 sind Ausgestaltungen der Erfindung näher beschrieben. In Figur 2 ist eine Nut zu einem internen Stand der Technik dargestellt, die mit den Ausgestaltungen nach Figur 1 und 3 verbessert ist.

Figur 1 zeigt teilweise einen um eine Rotationsachse 1a drehbaren Schaltmuffenträger 1 mit einer im Querschnitt T-förmigen Nut 2. Die Nut 2 verläuft in der Darstellung nach Figur 1 mit der Rotationsachse 1a richtungsgleich in die Bildebene hinein, erstreckt sich in der Tiefe radial in Richtung der Rotationsachse 1a und unterbricht dabei einen Zahnkranz 3 in einzelne Abschnitte 3a. Zu der Stirnseite 1 b, ebenso wie zu einer von der Stirnseite 1 b abgewandten und in der Darstellung nicht sichtbaren Stirnseite des Schaltmuffenträgers 1, ist die Nut 2 offen. Die Nut 2 ist beidseitig jeweils von Wandabschnitten 4 und 5 begrenzt, von denen sich jeweils die Wandabschnitte 4 und jeweils die Wandabschnitte 5 quer zur Rotationsachse 1a einander gegenüberliegen. Die Wandabschnitte 5 gehen an den Innenkanten 2a in den Nutgrund 6 über. Der Nutgrund 6 begrenzt die Nut 2 radial nach innen in Richtung des Schaltmuffenträgers 1 und weist einen V-förmigen bzw. dachförmigen Querschnitt auf. Dazu ist der Nutgrund 6 aus zwei Flächenabschnitten 6a gebildet. Jeder der ebenen Flächenabschnitte 6a weist in der Nut 2 flächenseitig radial nach außen und geht von einer der Innenkanten 2a ab. Dabei verlaufen die Flächenabschnitte 6a in Richtung der Rotationsachse 1 a geneigt sowie aufeinander zu und gehen an der Innenkante 6b ineinander über. Die Flächenabschnitte 6a und die Innenkante 6b verlaufen mit der Rotationsachse 1a richtungsgleich längs und enden an der Stirnseite 1b sowie an der in der Darstellung nicht sichtbaren Stirnseite des Schaltmuffenträgers 1.

In den Figuren 2 und 3 sind mit den Nuten 7 und 8 alternative Ausführungen zu der Nut 2 dargestellt, wobei die Nuten 7 und 8 sich durch die Ausbildung des Nutgrundes unterscheiden. Die Nuten 7 und 8 weisen jeweils Wandabschnitte 9, 10, und 11 auf, die sich mit der Rotationsachse 1a längs von der Stirnseite 1 b zu einer in der Darstellung nicht sichtbaren Stirnseite erstrecken. Der Zahnkranz 3 ist in Umfangsrichtung durch die Nut 7 unterbrochen und ist an dem Zahnkranz 3 durch je einen der Wandabschnitte 9 begrenzt. Überhänge 12 des Zahnkranzes 3 verengen die Nut 2 in radiale Richtung nach außen. Den sich tangential einander gegenüberliegenden Wandabschnitten 10 schließt sich der an den Wandabschnitten 11 verrundete Übergang zu dem Nutgrund an.

Die Wandabschnitte 11 der Nut 7 nach dem Stand der Technik gehen in eine ebene Fläche 13 über, die in der Nut 2 radial nach außen gewandt und im rechten Winkel zu den Wandabschnitten 9 und 10 ausgerichtet ist. Dagegen geht jeder der Wandabschnitte 11 in der Nut 8 in jeweils einen Flächenabschnitt 14 über. Die Flächenabschnitte 14 sind eben aus gebildet und verlaufen aufeinander zu. Dabei verlaufen die Flächenabschnitte 14 im Querschnitt der Nut 8 betrachtet in Richtung der in der in Figur 1 dargestellten Rotationsachse 1a geneigt, so dass die Flächenabschnitte 14 nutseitig einen stumpfen Winkel zwischen sich einschließen. Die Flächenabschnitte 14 gehen in der Mitte des Nutgrundes in eine mit einem Radius R verrundete Kehle 15 über. Die Kehle 15 und die Flächenabschnitte 14 verlaufen längs der Rotationsachse 1a von der Stirnseite 1b zu der in der Darstellung nach Figur 3 nicht sichtbaren Stirnseite des Schaltmuffenträgers 1.

Wie den Figuren 2a und 3a zu entnehmen ist, sind die an den Übergängen von den Wandabschnitten zu dem Nutgrund der Nuten auftretenden Spitzen der Spannungen aus der Belastung der Verzahnung mit einer erfindungsgemäß ausgeführten Nut deutlich reduziert. Die Figuren 2a und 3a zeigen die Spannungsverteilung in den Übergängen zum Grund der Nuten 7 und 8 beim Übertragen von einem Drehmoment von 1200 Nm. Die Verteilung der Spannungen in den einzelnen Abschnitten 3a des Zahnkranzes 3 ist nicht bildlich dargestellt, so dass der Zahnkranz 3, wie in den Figuren 2 und 3, weiter zeichnerisch nicht schattiert dargestellt ist. In einer Skala 16 sind Relativwerte von Spannungen unterschiedlicher Höhe ohne Zahlenangaben durch unterschiedliche Grautöne bzw. durch die Farben Schwarz oder Weiß symbolisiert. Die niedrigsten Spannungen sind der Farbe Schwarz zugeordnet. Mit zunehmender Spannung nimmt die Helligkeit der Grautöne zu. Die höchsten Spannungen, dass heißt die Spannungsspitzen sind der Farbe Weiß zugeordnet. Figur 2a zeigt dass in der Nut 7 nach dem Stand der Technik trotz eines verrundeten Überganges an dem Wandabschnitten Spannungsspitzen bei hohen Momenten auftreten. Hellgrau markierten Bereiche hoher Spannungen 19 und ein relativ großflächig ausgebildeter Bereich höchster Spannungen 20 erstrecken sich an jeder Innenseiten der Nut 7 von der Stirnseite 1a durch die Nut 7 bis in die andere in der Darstellung nicht sichtbare Stirnseite. In der gemäß Erfindung gestalteten Nut 8 sind die Wandabschnitte 11 dagegen bei gleicher Belastung von hohen uhd höchsten Spannungen frei. Es verbleibt lediglich ein Bereich von dem Material des Schaltmuffenträgers 1 ertragbarer Spannungen 18. Der relativ kleinflächige Bereich ertragbarer Spannungen 18 hebt sich kaum sichtbar von den schwarz gekennzeichneten Bereichen niedriger Spannungen 17 in der Struktur des Materials der Umgebung der Nut 8 ab.

### Bezugszeichen

- 1: Schaltmuffenträger
- 1 a: Rotationsachse
- 1 b: Stirnseite
- 2: Nut
- 2a: Innenkante
- 3: Zahnkranz
- 3a: Abschnitt
- 4: Wandabschnitt
- 5: Wandabschnitt
- 6: Nutgrund
- 6a: Flächenabschnitt
- 6b: Innenkante
- 7: Nut
- 8: Nut
- 9: Wandabschnitt
- 10: Wandabschnitt
- 11: Wandabschnitt
- 12: Überhang
- 13: Fläche
- 14: Flächenabschnitt
- 15: Kehlnut
- 16: Skala
- 17: Bereich niedriger Spannungen
- 18: Bereich ertragbarer Spannungen
- 19: Bereich hoher Spannungen
- 20: Bereich höchster Spannungen

## Patentansprüche

1. Schaltmuffenträger (1), der um eine Rotationsachse (1a) drehbar ist und eine Nut (2, 7, 8) aufweist, wobei die Nut (2, 7, 8)
- mit der Rotationsachse (1 a) des Schaltmuffenträgers (1) richtungsgleich verläuft,
- radial nach außen von der Rotationsachse (1a) weg sowie endseitig der Nut (2, 7, 8) und dabei stirnseitig des Schaltmuffenträgers (1) offen ist,
- einen umfangsseitig außen liegenden Zahnkranz (3) des Schaltmuffenträgers (1) unterbricht und
- zumindest durch wenigstens zwei quer zur Rotationsachse (1 a) einander gegenüberliegende und dabei jeweils stirnseitig des Schaltmuffenträgers (1) auslaufende Wandabschnitte (5, 11) des Muffenträgers (1) begrenzt ist,
**dadurch gekennzeichnet, dass** jeder der Wandabschnitte (5, 11) in jeweils einen flächenseitig radial in der Nut (2, 8) nach außen weisenden sowie von den Wandabschnitten (5, 11) weg radial nach innen zur Rotationsachse (1 a) hin abfallend verlaufenden Flächenabschnitt (6a, 14) übergeht, wobei die Flächenabschnitte (6a, 14) eben ausgebildet sind und zwischen den Wandabschnitten (5, 11) aufeinandertreffen und dabei ineinander übergehen.

2. Schaltmuffenträger nach Anspruch 1, **dadurch gekennzeichnet, dass** die Flächenabschnitte (14) in einer gemeinsamen zwischen den Wandabschnitten (11) mit der Rotationsachse (1 a) richtungsgleich verlaufenden sowie radial nach innen verrundeten Kehle (15) ineinander übergehen.

3. Schaltmuffenträger nach Anspruch 1 oder 2, **dadurch gekennzeichnet, dass** die Wandabschnitte (5, 11) von der Nut (2, 8) aus und dabei quer zur Rotationsachse (1 a) voneinander weg konvex gewölbt verlaufen und dass der Querschnitt der Nut (2, 8) mittels der Wandabschnitte (5, 11) zu den Flächenabschnitten (6a, 14) hin verrundet ist.

## Claims

1. Gearshift sleeve carrier (1) that can rotate about an axis of rotation (1a) and comprises a groove (2, 7,8), which groove (2, 7, 8)
- extends in the same direction as the axis of rotation (1a) of the gearshift sleeve carrier (1),
- is open radially outwards away from the axis of rotation (1a) and also at the ends of the groove (2, 7. 8) and, thus, at front ends of the gearshift sleeve carrier (1),
- interrupts a rim gear (3) of the gearshift sleeve carrier (1) situated peripherally outside and
- is defined by at least two wall sections (5, 11) of the sleeve carrier (1) that are situated opposite each other crosswise to the axis of rotation (1 a) and end at front ends of the gearshift sleeve carrier (1),
**characterised in that** each of the wall sections (5, 11) merges into a surface section (6a, 14) which is oriented radially outwards with its surface within the groove (2, 8) and descends radially inwards away from the wall sections (5, 11) towards the axis of rotation (1a), and said surface sections (6a, 14) have a flat configuration and meet each other to merge into each other between the wall sections (5, 11).

2. Gearshift sleeve carrier according to claim 1, **characterised in that** the surface sections (14) merge into each other in a common, radially inwards rounded valley (15) that is situated between the wall sections (11) and extends in the same direction as the axis of rotation (1a).

3. Gearshift sleeve carrier according to claim 1 or 2, **characterised in that**, starting from the groove (2, 8), the wall sections (5, 11) are convexly arched away from each other crosswise to the axis of rotation (1 a) and that, through the wall sections (5, 11), the cross-section of the groove (2, 8) is rounded towards the surface sections (6a, 14).

## Revendications

1. Support (1) de manchon de changement de vitesse qui est mobile en rotation autour d'un axe de rotation (1a) et comprend une rainure (2, 7, 8), cette rainure (2, 7, 8)
- s'étend dans la même direction que l'axe de rotation (1 a) du support (1) de manchon de changement de vitesse,
- est ouverte radialement vers l'extérieur à l'opposé de l'axe (1a) de rotation et est également ouverte aux côtés frontaux de la rainure (2, 7, 8) et, donc, aux côtés frontaux du support (1) de manchon de changement de vitesse,
- interrompt une couronne dentée (3) du support (1) de manchon de changement de vitesse laquelle couronne dentée (3) est situé sur l'extérieur du côté périphérique et
- est définie par, au moins, deux sections (5, 11) de paroi du support (1) du manchon opposées, l'une à l'autre, en travers de l'axe de rotation (1a) qui se terminent aux côtés frontaux du support (1) de manchon de changement de vitesse,
**caractérisé en ce que** chacune des sections (5, 11) de paroi se raccorde à une section (6a, 14) de surface dont la superficie dans la rainure (2, 8) est orientée radialement vers l'extérieur et descend radialement vers l'intérieur vers l'axe de rotation (1a) en s'éloignant des sections (5, 11) de paroi, et les sections (6a, 14) de surface ont une configuration plate et se rencontrent entre les sections (5, 11) de paroi pour se raccorder, l'une à l'autre.

2. Support de manchon de changement de vitesse selon la revendication 1, **caractérisé en ce que** les sections (14) de surface se raccordent, l'une à l'autre, dans une gorge (15) commune, arrondie radialement vers l'intérieur et située entre les sections (11) de paroi en s'étendant dans la même direction que l'axe de rotation (1a).

3. Support de manchon de changement de vitesse selon la revendication 1 ou 2, **caractérisé en ce que**, à partir de la rainure (2, 8), les sections (5, 11) de paroi se voûtent en forme convexe en s'éloignant, l'une de l'autre, en travers de l'axe de rotation (1a), et **en ce que**, à l'aide des sections (5, 11) de paroi, la section droite de la rainure (2, 8) est arrondie vers les sections (6a, 14) de surface.
